# FASCICULE DE BREVET EUROPEEN

(11) **EP 2 744 677 B1**
(45) Date de publication et mention de la délivrance du brevet: **26.02.2020**
(21) Numéro de dépôt: 12743498.3
(22) Date de dépôt: 03.07.2012
(51) Int. Cl.: B60K 11/02, F01P 7/14

(54) **SYSTÈME DE REFROIDISSEMENT POUR VÉHICULE À PROPULSION ÉLECTRIQUE**
KÜHLUNGSSYSTEM FÜR EIN ELEKTRISCH ANGETRIEBENES FAHRZEUG
COOLING SYSTEM FOR AN ELECTRICALLY DRIVEN VEHICLE

(30) Priorité: 17.08.2011 FR 1157366
(43) Date de publication de la demande: 25.06.2014
(73) Titulaire: Renault S.A.S., 92100 Boulogne-Billancourt (FR)
(72) Inventeur: CHEROUAT, Hatem, F-92160 Antony (FR); CREGUT, Samuel, F-78470 Saint-remy-les-chevreuse (FR)
(86) Numéro de dépôt international: PCT/FR2012/051544
(87) Numéro de publication internationale: WO 2013/024215

(56) Documents cités:
- WO-A2-2009/056926
- WO-A2-2009/056926
- GB-A- 2 383 840
- JP-A- 2004 076 603
- US-A1- 2010 100 266

## Description

L'invention se rapporte à un système de refroidissement pour un véhicule automobile à propulsion électrique. Ce véhicule peut être, soit électrique avec une propulsion exclusivement électrique, soit hybride avec une propulsion mixte impliquant un moteur électrique et un moteur à explosion. En matière de refroidissement, les exigences entre les véhicules à propulsion électrique et les véhicules dotés d'un moteur à explosion ne sont pas les mêmes. Pour un véhicule avec un moteur à explosion, le système de refroidissement est conventionnellement équipé d'une pompe attelée au moteur, permettant de faire circuler le liquide de refroidissement à travers le radiateur, ledit moteur à combustion et un échangeur pour faire chauffer l'habitacle. Le débit est directement fonction du régime moteur (il est nul lorsque le moteur est arrêté). Dans le cas d'un véhicule à propulsion électrique, il y a nécessité de refroidir non seulement les différents éléments de la chaine de traction permettant d'assurer le roulage dudit véhicule, mais aussi le chargeur, lorsque le véhicule est à l'arrêt, pour permettre de recharger la batterie à partir d'un réseau électrique domestique. Les différentes phases de refroidissement du moteur électrique et du chargeur sont réalisées au moyen d'au moins une pompe électrique, permettant la circulation du fluide de refroidissement avec un débit donné.

Afin de lever toute ambiguïté sur l'interprétation de certains mots, il est important de souligner que les termes « stratégie » et « méthode » trouvées dans la description, sont équivalents.

Un système de refroidissement pour un véhicule à propulsion électrique, doit non seulement être efficace lors des différentes phases d'utilisation du véhicule, comprenant essentiellement le roulage, l'arrêt, la charge de la batterie et son changement, mais également lors de la défaillance potentielle de certains éléments du circuit de refroidissement, comme les pompes électriques de circulation de fluide. En effet, les phases de surchauffe intempestives et durables du moteur électrique et/ou du chargeur sont particulièrement redoutées, car elles peuvent conduire à un endommagement important du véhicule et le rendre inutilisable. Les stratégies de refroidissement développées dans le cadre d'un système de refroidissement selon l'invention, permettent d'assurer un refroidissement efficace du moteur électrique durant toutes les phases d'utilisation du véhicule, en prenant en compte l'état de fonctionnement plus ou moins défectueux de certains éléments du circuit de refroidissement, et particulièrement des pompes électriques.

L'invention a pour objet un système de refroidissement d'un véhicule automobile doté d'une propulsion électrique, comprenant une unité centrale et un circuit de refroidissement comportant au moins une pompe de circulation d'un fluide de refroidissement, une électrovanne et un radiateur, ledit circuit étant destiné à refroidir un chargeur de batterie et un moteur électrique associé à un dispositif de pilotage électronique. Les principales caractéristiques d'un système de refroidissement selon l'invention sont définies par le partie caractérisante de la revendication 1. En effet, les pompes sont des éléments prépondérants du système de refroidissement, car, elles régissent le débit du fluide de refroidissement et sont donc en mesure de délivrer un refroidissement plus ou moins rapide, pouvant s'adapter aux différentes situations rencontrées, comme par exemple la surchauffe accidentelle d'un organe. Il est donc important qu'un refroidissement adapté soit présent à tout instant de la vie du véhicule, quel que soit l'état de fonctionnement de chaque pompe, sous peine d'être confronté à une surchauffe inacceptable du chargeur ou du moteur électrique. Pour être performant, complet, et sécuritaire, le système de refroidissement doit donc pouvoir couvrir toutes les situations possibles durant les phases d'utilisation du véhicule, comme l'arrêt, le roulage, le changement de batterie ou la charge de celle-ci, et doit pouvoir pallier toute défaillance potentielle de chaque pompe. Une pompe défaillante couvre le cas où elle réagit à un ordre de commande mais en ne réalisant pas la consigne demandée, et le cas où elle ne réagit plus à un ordre de commande en étant totalement inopérante. L'électrovanne peut être activée pour permettre ou empêcher le passage du fluide de refroidissement dans le chargeur, et constitue un élément essentiel dans le système de refroidissement permettant de multiplier les différentes stratégies de refroidissement à mettre en place, selon les circonstances. Le fluide de refroidissement peut par exemple être constitué par de l'eau.

Préférentiellement, l'unité centrale implémente des méthodes de commande du refroidissement, pour gérer une température élevée des organes, ou pour réaliser des phases de refus d'endormissement de l'unité centrale de calcul. Il s'agit d'une liste non-exhaustive de cas particuliers essentiels à bien gérer en matière de refroidissement, lors des différentes phases d'utilisation du véhicule, pour éviter de dégrader certains éléments comme le moteur électrique et le chargeur.

Avantageusement, le circuit de refroidissement comporte une première pompe utilisée en mode roulage et une deuxième pompe utilisée en mode recharge batterie, le débit de chacune desdites pompes pouvant être réglé par un signal de commande spécifique délivré par l'unité centrale. Le fait d'introduire au moins deux pompes dans le circuit de refroidissement, accroit la souplesse d'utilisation d'un système de refroidissement selon l'invention, par rapport à une configuration pour laquelle il n'y aurait qu'une pompe, en multipliant les combinaisons possibles d'utilisation entre celles-ci. Par ce biais, les systèmes de refroidissement sont plus complets et donc plus efficaces. Certes, il pourrait être ajouté une multiplicité de pompes sur le circuit de refroidissement pour accroitre encore plus les performances du système de refroidissement, mais il faudrait alors tenir compte de l'encombrement occasionné et du surcoût généré. Deux pompes permettent d'obtenir une performance satisfaisante du système de refroidissement, et un encombrement et des coûts réduits. De plus, la présence de deux pompes accroît les possibilités de compensation, dans le cas où l'une des deux pompes viendrait à être défaillante ou à tomber en panne.

De façon préférentielle, le signal de commande spécifique de la première et de la deuxième pompe est un signal de type Pulse Width Modulation (PWM).

De façon avantageuse, les méthodes de commande de refroidissement implémentées par l'unité centrale de calcul, sont développées à partir d'un premier module de calcul chargé d'élaborer une commande de débit de fluide de refroidissement quelle que soit la phase d'utilisation du véhicule, et d'un deuxième module de calcul intégrant les modes de défaillance de chaque pompe en tenant compte de la phase d'utilisation dudit véhicule. Si le circuit de refroidissement ne comporte qu'une seule pompe et que celle-ci est défaillante, l'unité centrale de calcul va développer une stratégie de refroidissement qui tendra à utiliser cette pompe défaillante de façon optimisée en tenant compte de ces capacités réduites. Une utilisation optimisée signifie une utilisation aux performances amoindries, mais sans risque d'endommager encore plus la pompe défaillante. Si le circuit comporte au moins deux pompes, les stratégies de commande de refroidissement permettront une utilisation des deux pompes en introduisant, par exemple, un coefficient pondérateur pour chacune de celles-ci, tenant compte de leur état de défaillance respectif.

Préférentiellement, les paramètres d'entrée des deux modules sont la température du fluide de refroidissement utilisé pour refroidir le moteur électrique, la température du liquide de refroidissement utilisé pour refroidir le chargeur, la température interne du chargeur, la température interne du moteur, la température interne du dispositif de pilotage électronique dudit moteur, un signal indiquant l'état du véhicule, un signal de synthèse des défaillances pour chaque pompe, et un signal qui traduit le refus ou l'acceptation d'endormir le calculateur, les paramètres de sortie étant, pour chaque pompe, une consigne de refroidissement se traduisant par un pourcentage du débit maximal pouvant être réalisé par celle-ci.

Avantageusement, le système de refroidissement comprend au moins un régulateur.

Selon un premier mode de réalisation préféré d'un système de refroidissement selon l'invention, le système de refroidissement comprend un régulateur par pompe.

Selon un deuxième mode de réalisation préféré d'un système de refroidissement selon l'invention, le système de refroidissement comprend plusieurs pompes et un seul régulateur prévu pour l'ensemble de ces pompes.

De façon avantageuse, le système de refroidissement comprend un régulateur pour chaque phase d'utilisation du véhicule.

De façon préférentielle, le deuxième module est conçu pour traiter trois configurations possibles pour chaque pompe, qui sont un fonctionnement normal, un fonctionnement en mode dégradé et un non fonctionnement. De cette manière, non seulement le système de refroidissement permet de contrôler et maitriser toutes les opérations de refroidissement durant les différentes phases d'utilisation du véhicule lors d'un fonctionnement normal de tous les éléments du circuit de refroidissement, mais il intègre également plusieurs niveaux de sécurité, permettant de tenir compte d'une défaillance partielle ou totale de chaque pompe. Le terme défaillance est général et couvre les deux configurations pour lesquelles chaque pompe est partiellement dégradée mais réagit à un ordre de commande sans réaliser la consigne demandée, et les situations pour lesquelles chaque pompe ne réagit plus à un ordre de commande. En prenant en compte l'état de défaillance de chaque pompe, les stratégies de refroidissement élaborées par l'unité centrale de calcul, minimisent, voire annulent les risques de surchauffe accidentelle du chargeur ou du moteur électrique et garantissent donc une durée de vie accrue pour lesdits véhicules.

Avantageusement, les différentes températures servant de données d'entrée aux modules, sont mesurées au moyen de capteurs. Les capteurs sont placés en des endroits stratégiques permettant d'assurer un relevé de température fiable, en toutes circonstances. A titre d'exemple, un seul capteur peut être employé pour mesurer la température de refroidissement utilisée pour refroidir à la fois le bloc moteur et le chargeur. Il s'agit certes d'une configuration plus économique, mais les mesures risquent de s'avérer moins précises.

Les systèmes de refroidissement selon l'invention, présentent l'avantage d'être configurés, non seulement pour assurer un refroidissement efficace et fiable du chargeur de batterie et du moteur électrique lors des différentes phases d'utilisation du véhicule, lors d'un fonctionnement normal de tous les éléments du circuit de refroidissement, mais également lors d'un fonctionnement dégradé ou d'une panne complète de chaque pompe. En effet, les stratégies de refroidissement qu'ils intègrent, ont été prévues pour gérer ce genre de situations critiques pouvant être grandement préjudiciables pour le véhicule concerné.

On donne ci-après, une description détaillée d'un mode de réalisation préféré d'un système de refroidissement selon l'invention, en se référant aux figures 1 à 3.
- La figure 1 est une vue simplifiée d'un système de refroidissement selon l'invention,
- La figure 2 est un logigramme montrant un module d'entrée et un module de sortie schématisant la stratégie d'élaboration de la commande de débit, hébergée dans l'unité centrale de calcul d'un système de refroidissement selon l'invention,
- La figure 3 est un logigramme détaillant le module de sortie de la figure 2.

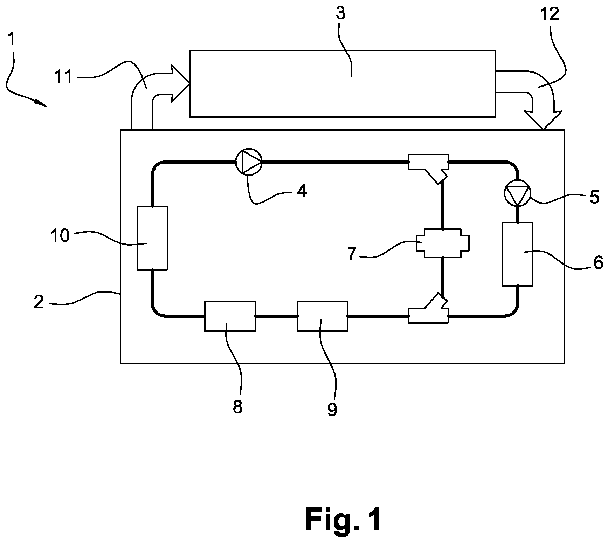

En se référant à la figure 1, un système de refroidissement 1 selon l'invention, comprend un circuit de refroidissement 2 et une unité centrale de calcul 3 hébergeant la stratégie d'élaboration de la commande de débit du liquide de refroidissement. Le circuit de refroidissement 2 comprend une première pompe électrique 4 utilisée en mode roulage et dont le débit peut être réglé à l'aide d'un signal de commande de type Pulse Width Modulation (PWM), une deuxième pompe électrique 5 utilisée en mode recharge batterie et dont le débit peut également être réglé à l'aide d'un signal de commande de type PWM, un chargeur 6 permettant lorsque le véhicule est à l'arrêt de recharger la batterie à partir du réseau électrique domestique, une électrovanne 7 pour court-circuiter le chargeur 6 lorsque le véhicule est en phase de roulage, un moteur électrique 8 et son électronique de pilotage 9 qui doivent être refroidis tous les deux en phase de roulage, et un radiateur 10 qui permet de refroidir le liquide de refroidissement de manière similaire à ce qui existe sur un moteur à combustion. Le circuit de refroidissement 2 est équipé de divers capteurs permettant notamment de mesurer différentes températures, lesdites mesures 11 alimentant l'unité centrale de calcul 3 pour élaborer la stratégie de commande 12 du débit de liquide de refroidissement appropriée.

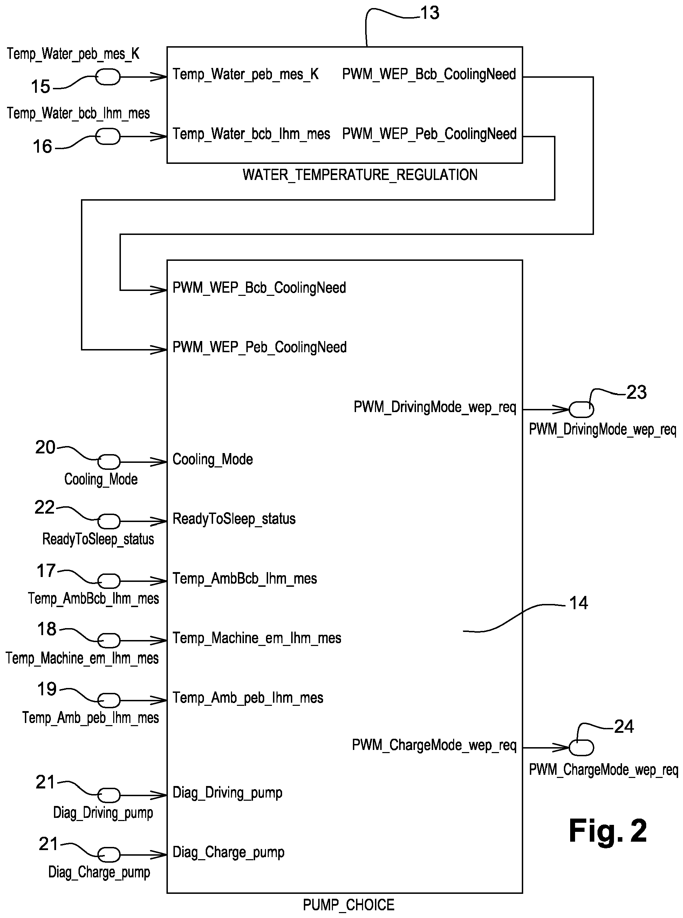

En se référant à la figure 2, la stratégie d'élaboration de la commande de débit du liquide de refroidissement est développée à partir de deux modules de calcul 13,14, l'un 13 étant chargé d'élaborer une commande de débit valable quelle que soit la phase d'utilisation du véhicule, qui peut par exemple être le roulage ou la charge de la batterie, l'autre module 14 permettant de sélectionner la ou les pompes 4,5 appropriées en intégrant leur mode de défaillance. Les entrées de la stratégie sont les suivantes :
15- 'Temp_Water_peb_mes_K': il s'agit de la température du liquide de refroidissement utilisée pour refroidir le moteur électrique 8 et son électronique de pilotage 9.
16- 'Temp_Water_bcb_lhm_mes' : il s'agit de la température du liquide de refroidissement utilisée pour Refroidir le chargeur 6. Ces deux températures peuvent être mesurées à partir d'un seul capteur (dans ce cas on dispose d'une seule mesure de température que l'on va dupliquer pour contrôler le débit de chacune des pompes) ce qui représente une solution économique mais un peu moins précise et optimale que dans le cas où les températures sont mesurées à deux endroits différents du liquide de refroidissement.
17- 'Temp_AmbBcb_lhm_mes' : il s'agit de la température interne du chargeur 6.
18- 'Temp_Machine_em_lhm_mes': il s'agit de la température interne du moteur 8.
19- 'Temp_Amb_peb_lhm_mes': il s'agit de la température interne de l'électronique de pilotage 9 du moteur 8.
20- 'Cooling_Mode' : il s'agit d'un signal en provenance du calculateur central du véhicule qui indique la phase d'utilisation du véhicule (roulage, charge, arrêt, changement de batterie).
21-Un signal de synthèse des défaillances pour chaque pompe 4,5. Ce signal peut contenir des diagnostics fonctionnels, des retours de l'électronique de la pompe 4,5, ou encore des diagnostics électriques sur le fil de commande, ce statut est : pompe 4,5 en fonctionnement normal, pompe en mode dégradé, pompe en panne.
22-Un signal qui traduit le refus ou l'acceptation d'endormir le calculateur 3

Les sorties de la stratégie sont les suivantes :
23-'PWM_DrivingMode_wep_req': il s'agit de la commande de débit de la pompe 4 utilisée en mode roulage ; il s'agit d'un signal entre 0 et 100 exprimant un pourcentage du débit maximal pouvant être réalisé par la pompe.
24-'PWM_ChargeMode_wep_req: il s'agit de la commande de débit de la pompe 5 utilisée en mode recharge de la batterie du véhicule; il s'agit d'un signal entre 0 et 100 exprimant un pourcentage du débit maximal pouvant être réalisé par la pompe.

Les sorties du premier module 13 sont une consigne de refroidissement pour la première pompe 4 utilisée en mode roulage et une consigne de refroidissement pour la deuxième pompe 5 utilisée en mode recharge. Ces consignes sont calculées à l'aide d'au moins un régulateur, qui peut être un régulateur proportionnel intégral, ou un régulateur proportionnel intégral dérivé, et dont le rôle est d'ajuster la demande de débit en fonction de l'écart entre les températures mesurées et les températures de référence.

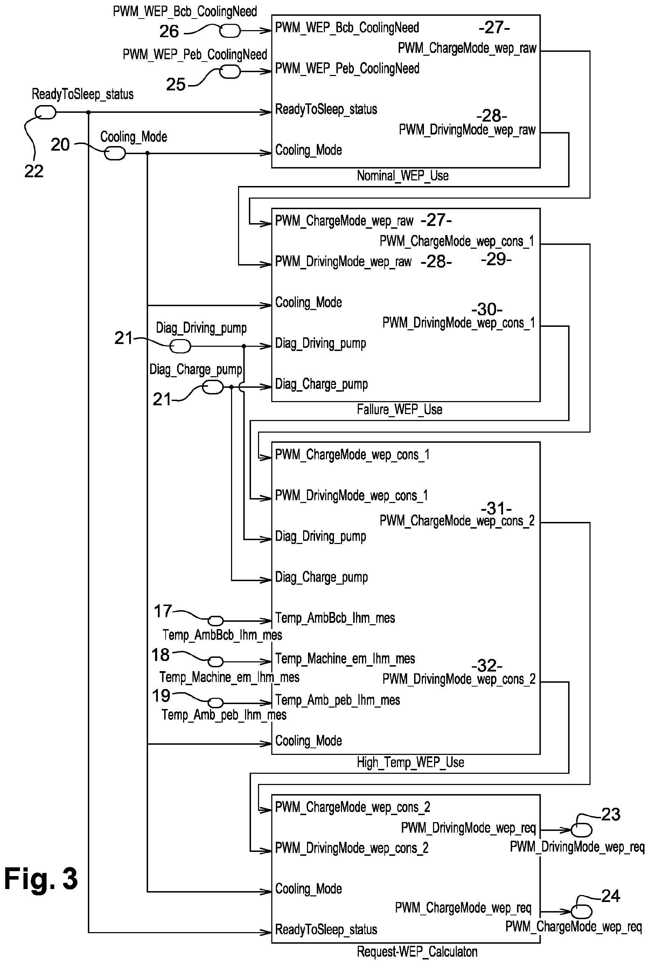

L'objectif de l'invention étant de protéger les organes contre un refroidissement insuffisant, et d'optimiser l'utilisation des pompes 4,5, en utilisant en permanence la bonne pompe 4,5 selon qu'il y ait une défaillance ou non, ou suivant la nature du mode de défaillance, le deuxième module 14, qui intègre l'état desdites pompes 4,5 permet de réaliser les quatre opérations successives suivantes, comme représenté à la figure 3 :

a) Nominal WEP_Use : dans ce bloc en fonction du mode (charge, roulage) et du statut d'endormissement (si on veut endormir le calculateur 3 après une fin de roulage ou de charge), on attribue les consignes selon la logique suivante :
- Si l'on est en charge, la sortie du premier module 13 PWM_WEP_Bcb_CoolingNeed 26 est attribuée à la deuxième pompe 5 utilisée en mode recharge. La première pompe 4 utilisée en mode roulage reçoit comme consigne la demande d'arrêt au lieu de PWM_WEP_Peb_CoolingNeed 25
- Si l'on est en roulage la sortie du premier module 13 PWM_WEP_Peb_CoolingNeed 25 est attribuée à la première pompe 4 utilisée en mode roulage. La deuxième pompe 5 utilisée en mode recharge reçoit comme consigne la demande d'arrêt au lieu de PWM_WEP_Bcb_CoolingNeed 26
- Si l'on est ni en charge, ni en roulage, et qu'il y a un refus d'endormir le calculateur 3 dans le cas d'une température élevée par exemple, on continue à refroidir en utilisant la consigne du dernier mode (si par exemple on était en roulage et que l'étape d'après, on est ni en charge, ni en roulage, ni en échange batterie, et que y a refus d'endormir le calculateur 3, alors on continue à refroidir en utilisant consigne de roulage PWM_WEP_Peb_CoolingNeed 25 avec la première pompe 4 utilisée en mode roulage).

Selon un autre mode de réalisation, il peut être décidé d'utiliser toujours la même pompe, indépendamment de l'état dans lequel on se trouvait avant, et avec une consigne issue du régulateur ou bien une consigne forfaitaire.

b) Failure_WEP_Use : dans ce bloc, on a comme entrées, les deux flux produits par le premier bloc que l'on va nommer PWM_ChargeMode_wep_raw 27 et PWM_DrivingMode_wep_raw 28, les signaux de diagnostic 21 des pompes 4,5, et le mode d'utilisation du véhicule (charge, roulage).

Dans les signaux de diagnostic, on va distinguer les cas suivants :
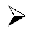 Pompe 4,5 en fonctionnement normal.
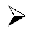 Pompe 4,5 fonctionnant en mode dégradé, ce mode désigne une pompe 4,5 qui ne réalise pas la consigne demandée et qui est donc incontrôlable, mais fonctionnelle. Dans ce mode, soit la pompe 4,5 fonctionne à pleine vitesse, soit à une vitesse fixe fournie par le constructeur).
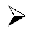 Pompe 4,5 arrêtée à cause d'une défaillance (pompe en panne).

Les sorties de ce bloc sont PWM_ChargeMode_wep_cons_1 29 et
PWM_DrivingMode_wep_cons_1 30 et sont calculées de la manière suivante :
- Cas1 : Si on est en mode charge et que la deuxième pompe 5 utilisée en mode charge est en panne,
   PWM_ChargeMode_wep_cons_1 = Arrêtée.
   PWM_DrivingMode_wep_cons_1 = PWM_ChargeMode_wep_raw.
- Cas2 : Si on est en mode charge et que la deuxième pompe 5 utilisée en mode charge est en mode dégradé,
   PWM_ChargeMode_wep_cons_1 = PWM_ChargeMode_wep_raw.
   PWM_DrivingMode_wep_cons_1 = Arrêtée
- Cas 3 : Si on est en mode charge et que la première pompe 4 utilisée en mode roulage est en mode dégradé,
   PWM_ChargeMode_wep_cons_1 = Arrêtée.
   PWM_DrivingMode_wep_cons_1 = PWM_ChargeMode_wep_raw
- Cas 4 : Si on est en mode roulage et que la première pompe 4 utilisée en mode roulage est en panne,
   PWM_ChargeMode_wep_cons_1 = PWM_Driving Mode_wep_raw.
   PWM_DrivingMode_wep_cons_1 = Arrêtée.
- Cas 5 : Si on est en mode roulage et que la première pompe 4 utilisée en mode roulage est en mode dégradé,
   PWM_ChargeMode_wep_cons_1 = Arrêtée.
   PWM_DrivingMode_wep_cons_1 = PWM_DrivingMode_wep_raw
- Cas 6 : Si on est en mode roulage et que la deuxième pompe 5 utilisée en mode charge est en mode dégradé,
   PWM_ChargeMode_wep_cons_1 = PWM_DrivingMode_wep_raw.
   PWM_DrivingMode_wep_cons_1 = Arrêtée

En résumé, si une pompe 4, 5 est en panne, on utilise l'autre pompe 4,5, et si une pompe 4, 5 est en mode dégradé, c'est cette dernière qui est utilisée. Dans tous les cas, on a toujours une pompe 4, 5 qui tourne en sortie de ce bloc.

c) High_Temp_WEP_Use : dans ce bloc, les entrées sont PWM_ChargeMode_wep_cons_1 29 et PWM_DrivingMode_wep_cons_1 30 (les sorties du bloc précédent), les températures des organes à refroidir (moteur 8, électronique de pilotage 9, et chargeur 6), les signaux de diagnostic 21 des pompes 4,5, et le mode d'utilisation du véhicule (charge, roulage).

Les sorties de ce bloc sont PWM_ChargeMode_wep_cons_2 31et PWM_DrivingMode_wep_cons_2 32 et sont calculées comme suit :
- Si on est en mode charge et que le chargeur 6 atteint un seuil de température déterminé qu'on estime critique et que la deuxième pompe 5 n'est pas en panne alors on a dans un premier temps :
   PWM_ChargeMode_wep_cons_2= Consigne max.
   PWM_DrivingMode_wep_cons_2= PWM_DrivingMode_wep_cons_1

Et si après un certain temps la température du chargeur 6 ne descend pas au dessous d'un deuxième seuil inférieur au premier seuil et que la première pompe 4 n'est pas en panne alors les sorties du bloc seront :
PWM_ChargeMode_wep_cons_2= Consigne max.
PWM_DrivingMode_wep_cons_2= Consigne max.
   - Si on est en mode roulage et que le moteur 8 ou l'électronique de pilotage 9 atteint un seuil de température déterminé qu'on estime critique et que la première pompe 4 n'est pas en panne alors on a dans un premier temps :
      PWM_ChargeMode_wep_cons_2= PWM_ChargeMode_wep_cons_1.
      PWM_DrivingMode_wep_cons_2= Consigne max

Et si après un certain temps la température du moteur 8 ou de l'électronique de pilotage 9 ne descend pas au dessous d'un deuxième seuil inférieur au premier et que la deuxième pompe 5 n'est pas en panne alors les sorties du bloc seront :
PWM_ChargeMode_wep_cons_2= Consigne max.
PWM_DrivingMode_wep_cons_2= Consigne max.

Il est à noter que le cas d'une des pompes 4,5 en mode dégradé est couvert ici, car le but de ce bloc est d'augmenter le débit dans le circuit 2 pour améliorer l'échange thermique en actionnant les deux pompes 4,5en même temps. Avec cette logique, même si une pompe 4,5 est en mode dégradé (elle est déjà activée), on aura les deux pompes 4,5 activées.

Dans les deux cas si une des pompes 4,5 est en panne elle garde la même consigne calculée dans le bloc précédent.

d) Request_WEP_Calculation :
Ce bloc constitue le dernier arbitrage des commandes de pompes 4,5.
Cas A- si on est en mode roulage ou charge les consignes calculées dans les blocs précédents sont appliquées,
Cas B- Si on a une demande d'arrêt de refroidissement et que les températures le permettent (pas de température élevée), on change les consignes par des consignes d'arrêt.
Cas C- Le dernier cas est le cas de l'échange batterie. Etant donné que dans ce mode on perd un certain nombre de mesures, en particulier les températures des organes 6, 8, 9, toutes les étapes de calcul sont annulées et on fige les commandes avec les dernières valeurs utilisées avant l'apparition de ce mode.

## Revendications

1. Système de refroidissement (1) d'un véhicule automobile doté d'une propulsion électrique, comprenant une unité centrale (3) et un circuit de refroidissement (2) comportant au moins une pompe (4, 5) de circulation d'un fluide de refroidissement, une électrovanne (7), et un radiateur (10), ledit circuit (2) étant destiné à refroidir un chargeur (6) de batterie et un moteur électrique (8) associé à un dispositif de pilotage électronique (9), **caractérisé en ce que** l'unité centrale de calcul (3) est configurée pour gérer l'activation de ladite au moins une pompe (4, 5), en intégrant les défaillances potentielles de chacune desdites pompes (4,5), et **en ce que** l'unité centrale de calcul est apte, si le circuit de refroidissement ne composte qu'une seule pompe, à developper une stratégie de refroidissement qui tendra à piloter de façon optimisée la pompe défaillante compte tenu de ses capacités réduites de fonctionnement ou, si le circuit de refroidissement comporte au moins deux pompes, à appliquer un coefficient pondérateur pour chacune des pompes (4, 5) tenant compte de leur état de défaillance respectif.

2. Système de refroidissement selon la revendication 1, **caractérisé en ce que** l'unité centrale implémente des méthodes de commande du refroidissement, pour gérer une température élevée des organes (6, 8, 9), ou pour réaliser des phases de refus d'endormissement de l'unité centrale de calcul (3).

3. Système de refroidissement selon l'une quelconque des revendications 1 ou 2, **caractérisé en ce que** le circuit de refroidissement (2) comporte une première pompe (4) utilisée en mode roulage et une deuxième pompe (5) utilisée en mode recharge batterie, le débit de chacune desdites pompes (4,5) pouvant être réglé par un signal de commande spécifique délivré par l'unité centrale (3).

4. Système de refroidissement selon la revendication 3, **caractérisé en ce que** le signal de commande spécifique de la première et de la deuxième pompe est un signal de type Pulse Width Modulation.

5. Système de refroidissement selon l'une quelconque des revendications 2 à 4, **caractérisé en ce que** les méthodes de commande de refroidissement implémentées par l'unité centrale de calcul (3), sont développées à partir d'un premier module (13) de calcul chargé d'élaborer une commande de débit de fluide de refroidissement quelle que soit la phase d'utilisation du véhicule, et d'un deuxième module (14) de calcul intégrant les modes de défaillance de chaque pompe (4, 5) en tenant compte de la phase d'utilisation dudit véhicule.

6. Système de refroidissement selon la revendication 5, **caractérisé en ce que** les paramètres d'entrée des deux modules (13, 14) sont la température du fluide de refroidissement utilisé pour refroidir le moteur électrique (8), la température du liquide de refroidissement utilisé pour refroidir le chargeur (6), la température interne du chargeur (6), la température interne du moteur (8), la température interne du dispositif de pilotage électronique (9) dudit moteur (8), un signal indiquant l'état du véhicule, un signal de synthèse des défaillances pour chaque pompe (4, 5) et un signal qui traduit le refus ou l'acceptation d'endormir le calculateur (3), et **en ce que** les paramètres de sortie des deux modules (13, 14) sont, pour chaque pompe (4, 5), une consigne de refroidissement se traduisant par un pourcentage du débit maximal pouvant être réalisé par celle-ci.

7. Système de refroidissement selon l'une quelconque des revendications 1 à 6, **caractérisé en ce qu'**il comprend au moins un régulateur.

8. Système de refroidissement selon la revendication 5, **caractérisé en ce que** le deuxième module (14) est conçu pour traiter trois configurations possibles pour chaque pompe (4,5), qui sont un fonctionnement normal, un fonctionnement en mode dégradé et un non fonctionnement.

9. Système de refroidissement selon la revendication 5, **caractérisé en ce que** les différentes températures servant de données d'entrée aux modules (13, 14) sont mesurées au moyen de capteurs.

## Patentansprüche

1. Kühlsystem (1) eines mit einem elektrischen Antrieb versehenen Kraftfahrzeugs, das eine Zentraleinheit (3) und einen Kühlkreislauf (2) enthält, der mindestens eine Umlaufpumpe (4, 5) eines Kühlfluids, ein Elektroventil (7) und einen Kühlkörper (10) aufweist, wobei der Kreislauf (2) dazu bestimmt ist, ein Batterieladegerät (6) und einen einer elektronischen Steuervorrichtung (9) zugeordneten Elektromotor (8) zu kühlen, **dadurch gekennzeichnet, dass** die zentrale Recheneinheit (3) konfiguriert ist, die Aktivierung der mindestens einen Pumpe (4, 5) zu verwalten, indem sie den möglichen Ausfall jeder der Pumpen (4, 5) einbezieht, und dass die zentrale Recheneinheit, wenn der Kühlkreislauf nur eine einzige Pumpe aufweist, eine Kühlstrategie entwickeln kann, die dahin tendiert, die ausgefallene Pumpe unter Berücksichtigung ihrer reduzierten Betriebsfähigkeiten optimiert zu steuern, oder, wenn der Kühlkreislauf mindestens zwei Pumpen aufweist, einen Gewichtungskoeffizienten für jede der Pumpen (4, 5) unter Berücksichtigung ihres jeweiligen Ausfallzustands anzuwenden.

2. Kühlsystem nach Anspruch 1, **dadurch gekennzeichnet, dass** die Zentraleinheit Steuermethoden der Kühlung implementiert, um eine hohe Temperatur der Elemente (6, 8, 9) zu verwalten, oder um Phasen des Schlafmodusverweigerns der zentralen Recheneinheit (3) zu realisieren.

3. Kühlsystem nach einem der Ansprüche 1 oder 2, **dadurch gekennzeichnet, dass** der Kühlkreislauf (2) eine erste Pumpe (4), die in der Betriebsart Fahren verwendet wird, und eine zweite Pumpe (5) aufweist, die in der Betriebsart Batterieaufladung verwendet wird, wobei der Durchsatz jeder der Pumpen (4, 5) durch ein spezielles Steuersignal geregelt werden kann, das von der Zentraleinheit (3) geliefert wird.

4. Kühlsystem nach Anspruch 3, **dadurch gekennzeichnet, dass** das spezielle Steuersignal der ersten und der zweiten Pumpe ein Signal der Art Pulse Width Modulation ist.

5. Kühlsystem nach einem der Ansprüche 2 bis 4, **dadurch gekennzeichnet, dass** die von der zentralen Recheneinheit (3) implementierten Kühlsteuerungsmethoden ausgehend von einem ersten Rechenmodul (13), das die Aufgabe hat, unabhängig von der Nutzungsphase des Fahrzeugs eine Kühlfluiddurchsatzsteuerung zu erarbeiten, und von einem zweiten Rechenmodul (14) entwickelt werden, das die Ausfallmodi jeder Pumpe (4, 5) unter Berücksichtigung der Nutzungsphase des Fahrzeugs einbezieht.

6. Kühlsystem nach Anspruch 5, **dadurch gekennzeichnet, dass** die Eingangsparameter der zwei Module (13, 14) die Temperatur des zum Kühlen des Elektromotors (8) verwendeten Kühlfluids, die Temperatur der zum Kühlen des Ladegeräts (6) verwendeten Kühlflüssigkeit, die Innentemperatur des Ladegeräts (6), die Innentemperatur des Motors (8), die Innentemperatur der elektronischen Steuervorrichtung (9) des Motors (8), ein den Zustand des Fahrzeugs anzeigendes Signal, ein Signal der Synthese der Ausfälle für jede Pumpe (4, 5) und ein Signal sind, das die Verweigerung oder die Akzeptierung ausdrückt, den Rechner (3) in den Schlafmodus zu versetzen, und dass die Ausgangsparameter der zwei Module (13, 14) für jede Pumpe (4, 5) ein Kühlsollwert sind, der sich durch einen Prozentsatz des maximalen Durchsatzes ausdrückt, der durch diese realisiert werden kann.

7. Kühlsystem nach einem der Ansprüche 1 bis 6, **dadurch gekennzeichnet, dass** es mindestens einen Regler enthält.

8. Kühlsystem nach Anspruch 5, **dadurch gekennzeichnet, dass** das zweite Modul (14) konzipiert ist, um drei mögliche Konfigurationen für jede Pumpe (4, 5) zu behandeln, die ein normaler Betrieb, ein eingeschränkter Betrieb und ein Nichtbetrieb sind.

9. Kühlsystem nach Anspruch 5, **dadurch gekennzeichnet, dass** die als Eingangsdaten für die Module (13, 14) dienenden verschiedenen Temperaturen mittels Sensoren gemessen werden.

## Claims

1. Cooling system (1) for a motor vehicle provided with electrical propulsion, comprising a central processing unit (3) and a cooling circuit (2) comprising at least one pump (4, 5) for circulating a coolant, a solenoid valve (7), and a radiator (10), said circuit (2) being intended to cool a battery charger (6) and an electric motor (8) associated with an electronic control device (9), **characterized in that** the computing central processing unit (3) is configured to manage the activation of said at least one pump (4, 5) by integrating the potential failures of each of said pumps (4, 5), and **in that** the computing central processing unit is capable, if the cooling circuit is composed of only a single pump, of developing a cooling strategy which will tend to control the failing pump optimally given its reduced operating capabilities or, if the cooling circuit comprises at least two pumps, of applying a weighting coefficient for each of the pumps (4, 5) given their respective failure state.

2. Cooling system according to Claim 1, **characterized in that** the central processing unit implements cooling control methods, to manage a high temperature of the members (6, 8, 9), or to implement sleep denial phases of the computing central processing unit (3).

3. Cooling system according to either of Claims 1 and 2, **characterized in that** the cooling circuit (2) comprises a first pump (4) used in running mode and a second pump (5) used in battery recharging mode, the flow rate of each of said pumps (4, 5) being able to be set by a specific control signal delivered by the central processing unit (3).

4. Cooling system according to Claim 3, **characterized in that** the specific control signal for the first and the second pumps is a signal of pulse width modulation type.

5. Cooling system according to any one of Claims 2 to 4, **characterized in that** the cooling control methods implemented by the computing central processing unit (3) are developed from a first computing module (13) responsible for creating a coolant flow rate command regardless of the phase of use of the vehicle, and from a second computing module (14) integrating the failure modes of each pump (4, 5) by taking into account the phase of use of said vehicle.

6. Cooling system according to Claim 5, **characterized in that** the input parameters of the two modules (13, 14) are the temperature of the coolant used to cool the electric motor (8), the temperature of the coolant used to cool the charger (6), the internal temperature of the charger (6), the internal temperature of the motor (8), the internal temperature of the electronic control device (9) of said motor (8), a signal indicating the status of the vehicle, a failure synthesis signal for each pump (4, 5) and a signal which reflects the denial or acceptance of putting the computer (3) to sleep, and **in that** the output parameters of the two modules (13, 14) are, for each pump (4, 5), a cooling setpoint which is expressed as a percentage of the maximum flow rate that can be produced thereby.

7. Cooling system according to any one of Claims 1 to 6, **characterized in that** it comprises at least one regulator.

8. Cooling system according to Claim 5, **characterized in that** the second module (14) is designed to process three possible configurations for each pump (4, 5), which are normal operation, degraded mode operation and non-operation.

9. Cooling system according to Claim 5, **characterized in that** the different temperatures used as input data for the modules (13, 14) are measured by means of sensors.
